# EUROPEAN PATENT APPLICATION

(11) **EP 4 548 747 A1**
(43) Date of publication of application: **07.05.2025**
(21) Application number: 23207904.6
(22) Date of filing: 06.11.2023
(51) Int. Cl.: A01F 12/44, A01D 69/03

(54) **A HYDRAULIC DRIVE SYSTEM FOR THE CLEANING FAN OF A COMBINE HARVESTER**

(71) Applicant: CNH Industrial Belgium N.V., 8210 Zedelgem (BE)
(72) Inventor: LEPLAE, Wim, 8210 Zedelgem (BE); SYRYN, Wim, 8210 Zedelgem (BE)
(74) Representative: CNH Industrial IP Department

(57) **Abstract**

The drive system comprises a hydraulic pump and a hydraulic motor, both having an inlet port and an outlet port, the motor being a fixed displacement motor directly coupled to the cleaning fan for rotationally driving said fan, the pump being a variable displacement pump configured to produce a flow of hydraulic liquid to the motor. In a system according to the invention, the outlet port of the pump is coupled to the inlet port of the motor by a hydraulic line, wherein said line does not comprise a valve for regulating a flow of hydraulic liquid to the motor. In the system of the invention, the flow to the motor is not regulated through a flow regulating valve between pump and motor, but by changing the pump displacement electronically. To this aim, the pump includes an electronically actuated hydraulic control system for controlling the pump displacement regardless of the hydraulic pressure of the liquid in the hydraulic line between the pump and the motor. The pump and the motor are part of an open hydraulic circuit.

## Description

### Field of the Invention

The present invention is related to combine harvesters, in particular to a system for driving the rotation of the cleaning fan.

### State of the art.

Agricultural combine harvesters are used to harvest and process crops such as corn or wheat, separating the grains from the plant residue and collecting clean grains in a grain tank. A combine harvester typically comprises a threshing section and a cleaning section, the latter including sieves for separating clean grains from smaller plant residue, and a cleaning fan for generating a flow of air to blow larger particles towards the back of the harvester, while only smaller particles and grain fall onto the sieves.

The drive system of the cleaning fan may be a mechanical drive, usually a belt drive, which has the advantage of a good energy efficiency, but which is limited in terms of the speed variability. This is not desirable given that the fan speed needs to be controlled within a wide range, depending on the crop type and the harvesting conditions. A much higher speed variability is available when using a hydraulic fan drive, but existing drives of this type are technically complex and/or lack energy efficiency.

A known hydraulic drive system that is in use today includes a hydraulic fixed displacement pump coupled to the combine's engine, so that the pump is active whenever the engine is working. The pump delivers a flow of hydraulic liquid to a hydraulic motor directly coupled to the fan. A controllable valve is furthermore mounted between the pump and the fan, to allow regulating the flow of hydraulic liquid (usually oil) to the motor and thereby regulate the fan speed. The valve however necessarily leads to a significant energy loss as it involves pumping up a large oil flow, and using only a portion thereof for driving the motor. The non-used portion of the oil flow flows back to the oil tank and its energy is dissipated in the form of non-used heat losses.

More efficient configurations are described for example in patent publication document DE10005067. This document discloses two different hydraulic drive systems for the cleaning fan of a combine harvester. The first system comprises a variable displacement pump provided with an electronically controlled valve system for regulating the pump displacement. The pump is arranged in a closed loop hydraulic circuit that enables to drive the hydraulic motor in two rotational directions. This is however a technically complex solution.

The second system described in DE10005067 includes a variable displacement load sensing pump arranged in an open loop hydraulic circuit. A flow control valve external to the pump is included in the circuit and arranged to control the pump. Despite the fact that the pump is a variable displacement pump, the external valve represents an energy loss.

### Summary of the invention

The invention is related to a drive system for a cleaning fan of a combine harvester, as described in the appended claims. The harvester comprises an engine, a threshing section and a cleaning section, the cleaning section comprising said cleaning fan and one or more sieves. The drive system comprises a hydraulic pump and a hydraulic motor, both having an inlet port and an outlet port, the motor being a fixed displacement motor coupled to the cleaning fan for rotationally driving said fan, the pump being a variable displacement pump configured to produce a flow of hydraulic liquid to the motor. The motor may be coupled directly to the cleaning fan, or indirectly, for example via a belt drive. In a system according to the invention, the outlet port of the pump is coupled to the inlet port of the motor by a hydraulic line, wherein said line does not comprise a valve for regulating a flow of hydraulic liquid to the motor. In the last sentence, a 'valve for regulating the flow' is to be understood as a valve configured to regulate the flow rate continuously within a given range, to thereby regulate the fan speed. In the system of the invention, the flow to the motor is not regulated through a flow regulating valve between pump and motor, but by changing the pump displacement electronically. To this aim, the pump includes an electronically actuated hydraulic control system for controlling the pump displacement regardless of the hydraulic pressure of the liquid in the hydraulic line between the pump and the motor. The pump and the motor are part of an open hydraulic circuit.

Whereas the open circuit does not include a flow regulating valve as defined above, a shut-off valve may be included in order to decouple the pump from the motor. This may be required for example if the system is not provided with a clutch for interrupting the mechanical connection between the pump and the harvester's engine.

The use of the above-described type of pump in an open loop circuit represents an advantage over the prior art in terms of a gain in energy efficiency obtained with less mechanical complexity compared to existing solutions.

### Brief description of the figures

Figure 1 is a conceptual side view of a combine harvester and its main components.
Figure 2 illustrates a drive system for driving the cleaning fan of a combine harvester, in accordance with an embodiment of the invention.
Figure 3 illustrates a hydraulic pump suitable for use in a system according to the invention.
Figure 4 illustrates an alternative embodiment of the invention.

### Detailed description of preferred embodiments of the invention

Preferred embodiments will now be described with reference to the drawings. The detailed description is not limiting the scope of the invention, which is defined only by the appended claims.

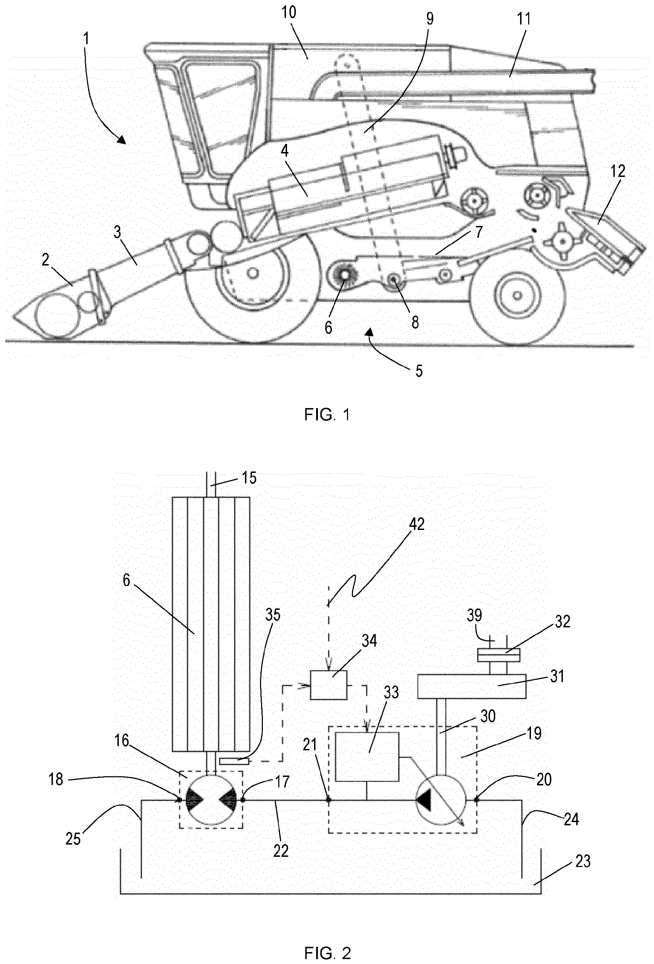

Figure 1 shows a simplified side view of a combine harvester as known in the art. The harvester 1 includes a number of well-known components, including a header 2 for cutting crops from the field, and for gathering the crops towards the inlet of a feeder 3. The feeder delivers the crops to one or two threshing rotors 4 which separate larger plant material from grains and smaller residue. The cleaning section 5 of the harvester includes a cleaning fan 6 and a plurality of sieves 7. A clean grain auger 8 is located in a trough at the bottom of the cleaning section 5. A grain elevator 9 is depicted as well. The elevator is drawn in dotted lines as it is located on the opposite side of the harvester so as to receive grains delivered by the auger 8. The elevator 9 then transports the grains upwards into a grain tank 10. In most harvesters, grains are evacuated from the tank during a harvesting run by additional grain augers (not shown) at the bottom of the tank, and by a grain spout 11 that can be swivelled outwards so that grains can be deposited in a trailer moving alongside the harvester in the field. At the back of the harvester, larger and smaller plant residue issuing from the threshing rotors 4 and the cleaning section 5 may be processed into small particles which are deposited on the field by a spreader 12.

Figure 2 illustrates a drive system for driving the cleaning fan 6 according to a first embodiment of the invention. The rotation axle 15 of the fan is directly coupled to the axle of a fixed displacement hydraulic motor 16 having an inlet port 17 and an outlet port 18. The system further comprises a variable displacement pump 19 comprising an inlet port 20 and an outlet port 21. The inlet port 17 of the motor 16 is coupled by a hydraulic line 22 to the outlet port 21 of the pump 19. The motor and the pump are part of an open hydraulic circuit including an oil reservoir 23 and hydraulic lines 24,25 respectively from the reservoir 23 to the inlet port 20 of the pump 19 and from the outlet port 18 of the motor 16 to the reservoir 23.

In the embodiment of Figure 2, the pump's axle 30 is driven through a gearbox 31 that is coupled to the engine (not shown) of the harvester via a clutch 32 that can be engaged or disengaged by the combine's driver by actuating a command in the driver's cabin, to thereby engage or disengage the pump 19. The speed at the inlet axle 39 of the clutch 32 may be the engine speed or a speed proportional thereto and derived therefrom through an additional transmission (not shown).

When the clutch 32 is engaged, the pump 19 rotates at a given speed, determined by the speed ratio of the gearbox 31. Incorporated in the pump is an electronically driven control valve system 33 that receives an input signal from a control unit 34 coupled to a speed sensor 35 configured to measure the rotational speed of the fan 6. The valve system 33 is configured to control the pump displacement and thereby the flow towards the motor 16 based on the measured rotational speed of the fan 6. The control unit 33 sets a required pump displacement in order to regulate the speed of the motor 16 and thereby the speed of the fan 6 at a desired speed.

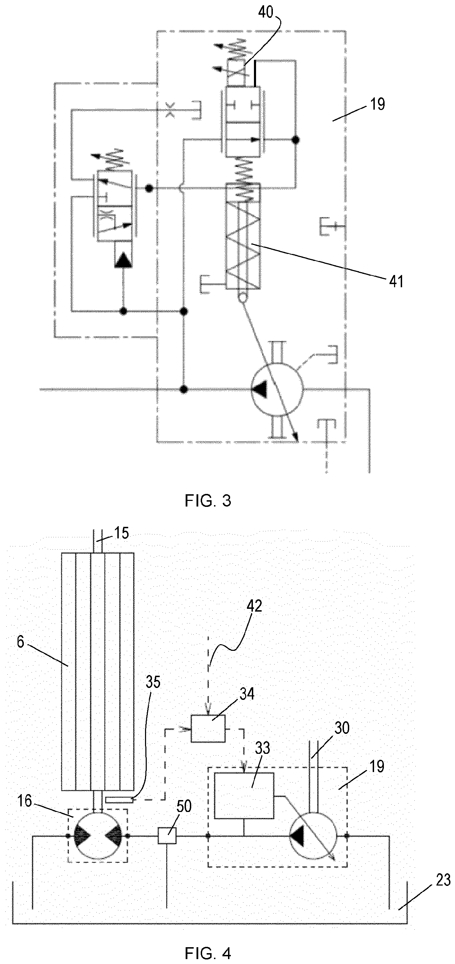

The control valve system 30 is configured to control the displacement of the pump without requiring a flow regulating valve in the open loop circuit. An example of a suitable pump 19 is shown in Figure 3. The signal from the control unit 34 is received by a solenoid 40 configured to shift a spring-operated piston 41 that sets the pump's displacement. Pumps of this type are known as such and a detailed description of the pump's components and operation is not needed here.

By using this type of pump, the flow rate of hydraulic liquid to the motor is controlled regardless of the hydraulic pressure in the line 22 between the pump 19 and the motor 16, without requiring a flow regulating valve in said line 22. The pump 19 operates in an open loop circuit, enabling to drive the hydraulic motor 16 in one rotational direction. The use of this type of directly controlled variable displacement pump in an open loop is advantageous because it is a technically straightforward solution to the problems of the prior art.

As seen in the embodiment of Figure 2, the control unit 34 receives an additional signal 42. This signal is representative of the engine speed. The control unit 34 is configured to take the engine speed into account when determining the required pump displacement. This enables maintaining a desired fan speed when the engine speed is changing.

A second embodiment is illustrated in Figure 4. Now the pump 19 is driven at a speed that is equal or proportional to the engine speed and without a releasable clutch that enables the pump to be decoupled from this engine-related speed. The other features of the first embodiment are also included and referred to by the same numerical references. In order to decouple the fan 6 from the pump 19, a shut-off valve 50 is now included in the hydraulic circuit, between the pump 19 and the motor 16. The shut-off valve 50 is working as a minimum pressure valve. The valve setting should be chosen to generate enough pressure to keep the pump at zero stroke when no current is applied to the pump solenoid 40. When activating the cleaning fan, the applied current to the solenoid of the pump will bring the pump on stroke, the resulting pressure increase will open the minimum pressure valve 50 and the fan drive motor 16 can run at the intended speed.

## Claims

1. A drive system for a cleaning fan of a combine harvester comprising an engine, the harvester comprising a threshing section and a cleaning section, the cleaning section comprising said cleaning fan and one or more sieves, the drive system comprising a hydraulic pump and a hydraulic motor, both having an inlet port and an outlet port, the motor being a fixed displacement motor coupled to the cleaning fan for rotationally driving said fan, the pump being a variable displacement pump configured to produce a flow of hydraulic liquid to the motor, wherein :
- the outlet port of the pump is coupled to the inlet port of the motor by a hydraulic line, wherein said line does not comprise a valve for regulating a flow of hydraulic liquid to the motor,
- the pump includes an electronically actuated hydraulic control system for controlling the pump displacement regardless of the hydraulic pressure of the liquid in the hydraulic line between the pump and the motor,
- the pump and the motor are part of an open hydraulic circuit.

2. The drive system according to claim 1, comprising an electronic control unit and a speed sensor for measuring a rotational speed of the fan, wherein the control unit is :
- connected to said sensor so as to receive a signal representative of said fan speed,
- connected to the pump so as to output a control signal to the pump's electronically actuated control system for driving the fan at a predefined speed.

3. The drive system according to claim 1 or 2, wherein the pump is driven through a gearbox, and wherein the gearbox is directly or indirectly coupled to the engine, via a releasable clutch.

4. The drive system according to claim 1 or 2, wherein the pump is coupled to the engine without a clutch therebetween, and wherein a minimum pressure valve is included in the hydraulic line between the pump and the motor.

5. A combine harvester comprising a drive system according to claim 2, and further comprising an engine, wherein the pump is driven at a rotational speed that is equal to or proportional to the speed of the engine, and wherein the control unit is configured to receive a signal representative of the engine speed.
